# EUROPÄISCHE PATENTANMELDUNG

(11) **EP 0 955 398 A2**
(43) Veröffentlichungstag der Anmeldung: **10.11.1999**
(21) Anmeldenummer: 99105927.0
(22) Anmeldetag: 24.03.1999
(51) Int. Cl.: D01H 4/12

(54) **Dämpfungseinrichtung für einen berührungslos gelagerten Rotor**

(30) Priorität: 04.05.1998 DE 19819767
(71) Anmelder: W. Schlafhorst & Co., D-41061 Mönchengladbach (DE)
(72) Erfinder: Coenen, Norbert, 41199 Mönchengladbach (DE)

(57) **Zusammenfassung**

Die Erfindung betrifft eine Dämpfungseinrichtung für den Spinnrotor (3) einer Offenend-Spinnvorrichtung (1).
Der Spinnrotor (3) ist über eine Magnetlageranordnung 43, radial und axial fixiert, bezüglich des Gehäuses der Spinnvorrichtung (1) galvanisch getrennt gelagert und rotiert mit hoher Drehfrequenz.

Die erfindungsgemäße Dämpfungseinrichtung 42 setzt insbesondere während der Beschleunigungsphase, beim Durchlaufen des Eigenfrequenzbereiches, auftretende Schwingungen unmittelbar in Reibungsverluste um.

## Beschreibung

Die Erfindung betrifft eine Dämpfungseinrichtung einer berührungslosen, passiven radialen Lagerung eines mit hoher Drehfrequenz rotierenden Rotors, insbesondere einer Offenend-Spinneinrichtung gemäß dem Oberbegriff des Anpruchs 1.

Bei einem berührungslos, z.B. magnetisch oder aerostatisch, gelagerten Rotor mit passiver Radiallagerung besteht das Problem, daß es zu unerwünschten radialen Schwingungen kommen kann. Hierbei entsteht die Gefahr, daß die Schwingungen eine Größenordnung annehmen können, bei der die radiale Auslenkung des Rotors so hoch wird, daß der Rotor sein Fanglager bzw. ein anderes nahe gelegenes Bauteil berührt, und somit ein weiteres Erhöhen der Drehfrequenz aus dein Bereich der Eigenresonanz heraus nur mit sehr großen Drehbeschleunigungen oder gar nicht mehr möglich wird. Daher benutzt man in derartigen Fällen Lagerungssysteme, die über eine radiale Schwingungsdämpfung verfügen.

Ein berührungslos gelagerter Rotor kann z.B. bezüglich der radialen Schwinganregung aktiv gedämpft werden. Hierzu ist ein relativ hoher Aufwand für Sensorik, Aktorik und Regelung nötig.

Eine andere Möglicheit der radialen Schwingungsdämpfung liegt in Gestalt einer passiven Schwingungsdämpfung vor, bei der ebenfalls versucht wird die radiale Auslenkung herabzusetzen. Eine derartige Einrichtung ist beispielsweise durch die DE 195 437 45 A1 bekannt.

In dieser Druckschrift wird der Statormagnet eines Magnetlagers elastisch an Federbeinen aufgehängt. Das statorseitige Magnetlager wird zusätzlich von einer reibenden Verbindung gehalten, die bei entsprechend großer Schwingungsamplitude des Rotors mit Reibung einzusetzen beginnt, und so eine Dämpfung bewirkt.

Nachteilig bei einer Lageranordnung nach DE 195 437 45 A1 ist beispielsweise, daß die Schwingungskompensation erst wirksam wird, wenn die Schwingungsamplitude eine Größe angenommen hat, bei der die Reibung einsetzt. Bevor dieser Wert, bei dem die Reibvorrichtung zu arbeiten beginnt, nicht erreicht ist, erfolgt ein ungedämpfter Betrieb. Die erst später einsetzende Dämpfungswirkung steht einem dauerhaft schwingungsarmen Lauf des Rotors entgegen.

Als weiterer Nachteil ist zu nennen, daß sich die Fertigung der Federbeinanordnung sehr schwierig und aufwendig gestaltet. Ungenauigkeiten dort führen zu einem radialen Versatz und oder zu einem Fehler in Bezug auf die Einhaltung des gewünschten Luftspaltes und oder zu einem Fehler im Bezug auf die Planparallelität der Lagermagnete wodurch die Funktion der Lagerungsanordnung in Frage gestellt wird.

Nachteilig ist ebenfalls, daß die Steifigkeit des Magnetlagers um die Steifigkeit der Federbeinanordnung gemindert wird. Dadurch, daß der den Rotor fixierende Statormagnet nicht völlig ortsgebunden ist, da er schwingbar angebracht wurde, ist die Lage des Rotors analog zu den Schwingbewegungen des Statormagneten inkonstant. Das schwingungsdämpfende Oszillieren der Statormagneten kann zu einer zusätzlichen Beeinträchtigung der Rotorlaufruhe führen. Eine ungünstige Überlagerung der beiden Schwingfrequenzen ist nicht auszuschließen.

Die oben genannten Nachteile können sowohl allein als auch in Kombination auftreten, wobei in beiden Fällen keine einwandfreie Funktion der Dämpfungseinrichtung gegeben ist.

Ausgehend von Einrichtungen der eingangs beschriebenen Gattung liegt der Erfindung daher die Aufgabe zugrunde, derartige Vorrichtungen zu verbessern.
Insbesondere soll eine Dämpfungseinrichtung geschaffen werden, die die vorgenannten Nachteile vermeidet und eine verbesserte Laufruhe des Spinnrotors bewirkt.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die erfindungsgemäße Ausführungsform hat insbesondere den Vorteil, daß durch die den Rotorschaft umschließende Lagerkomponente das Auftreten großer Schwingungsamplituden, bei denen der Rotor am Stator anschlagen kann, zuverlässig vermieden wird. Das heißt, es wird auf einfache Weise sichergestellt, daß es beim Hochbeschleunigen des berührungslos, passiv gelagerten Spinnrotors, auch beim Durchfahren seiner Eigenschwingungsfrequenzbereiche, nicht zu Problemen durch sich aufschaukelnde Schwingungen kommen kann.

Insbesondere bietet die erfindungsgemäße Ausgestaltung der Dämpfungseinrichtung den Vorteil, daß die Dämpfung unmittelbar bei den ersten nennenswerten Schwingungen einsetzt, und demnach größere Schwingungsamplituden hinsichtlich der Auslenkung ausbleiben.

Darüberhinaus ist die unkritische Herstellung der Dämpfungseinrichtungskomponenten vorteilhaft, da durch Fertigungstoleranzen oder Maßfehler kaum nachteilige Einflüsse auf die Rotorlagerung selbst ausgeübt werden.

Vorteilhaft stellt sich, wie in Anspruch 2 beschrieben, die Verwendung eines speziellen Wälzlagers für hohe Drehfrequenzen dar, da so eine nahezu spielfreie "Reaktion" der Dämpfungseinrichtung auf die entstandenen Schwingungen erfolgt.

In Anspruch 3 wird der Einsatz eines aerostatischen Lagers als Lagerkomponente aufgeführt. Dies bietet den Vorteil, daß ebenso wie bei Verwendung eines Wälzlagers unmittelbar bei der ersten Schwingung die Dämpfung einsetzt, zusätzlich wird aber durch die Verwendung des aerostatischen Lagers die Lagerreibung deutlich minimiert. Bei Verwendung einer aerostatischen Lagerung des Rotors selbst, wäre eine Integration des aerostatischen Lagers der Dämpfungseinrichtung in die Rotorradiallagerung denkbar.

Die Verwendung einer Gleitlagerbuchse als Lagerkomponente, wie in Anspruch 4 geschildert, bringt eine kostengünstige Lagerung. Durch die konstruktive Ausgestaltung von Gleitlagerbuchse und Rotorschaft mit einem gewissen Lagerspiel, wie es in Anspruch 6 beschrieben ist, kommt es beim normalen schwingungsfreien Spinnbetrieb zu keinem Kontakt zwischen Rotor und Lagerkomponente, so daß beim Normalbetrieb kein Verschleiß auftritt. Es erfolgt im wesentlichen nur eine radiale Schwingungsbegrenzung beim Durchfahren der Eigenschwingungsbereiche.

Bei allen Ausgestaltungen den Ansprüchen 2 bis 4 entsprechend ist zu bemerken, daß die jeweils verwendete Lagerkomponente beim normalen, schwingungsfreien Lauf des Rotors keinen Anteil an der radialen Lagerung des Rotorschaftes hat.

Eine Ausgestaltung der Erfindung nach Anspruch 5 erbringt in Verbindung mit Anspruch 2 und 3 eine unmittelbar einsetzende Reibung nach Auftreten der ersten Schwingung. Die spielarme, unmittelbare Kopplung zwischen radialer Auslenkung und Dämpfung führt zu einer direkten Radialdämpfung des Rotors.

Des weiteren bietet eine Realisierung nach Anspruch 5 den Vorteil, daß durch den kaum vorhandenen Luftspalt die maximale Öffnung der Lagerstelle begrenzt wird und es so zu einer gleichzeitigen Sicherung gegen Verschmutzung kommt.

Eine Ausgestaltung des Lagerspieles kleiner als das Begrenzungslagerspiel, wie in Anspruch 6 beschrieben, bringt den Vorteil mit sich, daß die Differenz der beiden Lagerspiele zu einem akzeptablen Dämpfungsweg führt. Nach Überwindung des Lagerspieles , ausgelöst durch eine Schwingung setzt die Dämpfung ein, bis entweder das Begrenzungslagerspiel überbrückt ist, oder ein lageveränderbaren Reibpartner, beispielsweise eine bewegliche Reibplatte an einen Anschlag anläuft.

In Anspruch 7 wird auf den Einsatz einer Verstelleinrichtung für die Dämpfungseinrichtung eingegangen. Vorteilhaft wirkt sich bei einer Verstelleinrichtung die Möglichkeit der Dosierung der Reibarbeit und somit der Dämpfung aus. "Dämpfungsbilder" von hart bis weich sind je nach Anforderung einstellbar.

Ergänzend zum Anspruch 7 wird in Anspruch 8 die Verstellung der Dämpfungseinrichtung mit mindestens einem Schraubenbolzen beschrieben. Das bieten den Vorteil der exakten Dosierbarkeit des "Dämpfungswertes" der Vorrichtung. Eine Einstellung des Reibdruckes wäre alternativ auch mittels vorgespannter Blattfeder denkbar.

Wie in Anspruch 9 dargelegt, ist es von Vorteil den maximalen radialen Weg, den die Reibplatte mit der Lagerkomponente bei Schwingungen ausführt zu begrenzen. Diese mechanische Begrenzung mittels Anschlag kann auch als Ersatz für ein Fang- bzw. Begrenzungslager dienen.

Eine vorteilhafte Ausführungsform für einen mechanischen Anschlag ist durch einen Ring gegeben, wie in Anspruch 10 erläutert. Vorteilhaft ist hier die Konzentrizität des Ringes zur Rotorachse, so daß ein Anschlagen der Reibplatte aufgrund der geschlossenen Kontur des Ringes in jeder Richtung gewährleistet ist.

Anspruch 11 beschreibt eine mechanische Radialwegsbegrenzung der Reibplatte und der Lagerkomponente mittels geeigneter Dimensionierung der Schraubbolzen und der Bohrungen in der Reibplatte. Der Vorteil ist hierbei, daß ein gesonderter Anschlag entfällt. Eine kostengünstige Gestaltung der Radialwegbegrenzung ist so relativ einfach zu erreichen.

Der Vorteil, den eine Ausführungsform nach Anspruch 12 bietet, ist dergestalt, daß durch Einsatz der zwischen der Reibplatte und dem stationären Reibpartner liegenden Zwischenplatte neben der Reibfläche noch eine zusätzliche Reibfläche gebildet wird. Durch die Trägheit der Masse geht bei Schwingungen zuerst nur die Zwischenplatte mit der Reibplatte einen schwingungsdämpfenden Reibschluß ein. Wenn die Schwingungen eine Intensität annehmen, bei der die Reibung zwischen den Reibpartnern zu "träge" wird und die Zwischenplatte mit zu schwingen beginnt, kommt es zu einer weiteren reibenden Verbindung zwischen der Zwischenplatte und dem stationären Reibpartner. Eine doppelte Entkopplung ist hinsichtlich der Schwingungen somit zwischen Stator und Rotor gegeben.

Weitere Einzelheiten der Erfindung sind den anhand von Zeichnungen dargestellten Ausführungsbeispielen zu entnehmen, die beispielhaft Lageranordnungen an Offenend-Spinnvorrichtungen betreffen.

Es zeigt:
- Fig.1:: in Seitenansicht eine schematische Darstellung einer OE-Spinnvorrichtung mit einer berührungslosen, passiven Spinnrotorlagerung, teilweise im Schnitt,
- Fig.2:: in Seitenansicht und in vergrößertem Maßstab, den Endbereich einer magnetischen Spinnrotorlagerung mit Dämpfungseinrichtung, ebenfalls teilweise im Schnitt,
- Fig.3:: eine erfindungsgemäße Dämpfungseinrichtung gemäß Fig.2, in Vorderansicht,
- Fig.4:: in Seitenansicht beide Lageranordnungen einer radialgedämpften, magnetischen Spinnrotorlagerung, ebenfalls teilweise im Schnitt,
- Fig.5:: in Seitenansicht und in vergrößertem Maßstab, den Endbereich einer magnetischen Spinnrotorlagerung, mit einem Wälzlager als Lagerkomponente, ebenfalls teilweise im Schnitt,
- Fig.6:: in Seitenansicht und in vergrößertem Maßstab, den Endbereich einer magnetischen Spinnrotorlagerung, mit einem aerostatischen Lager als Lagerkomponente, ebenfalls teilweise im Schnitt.

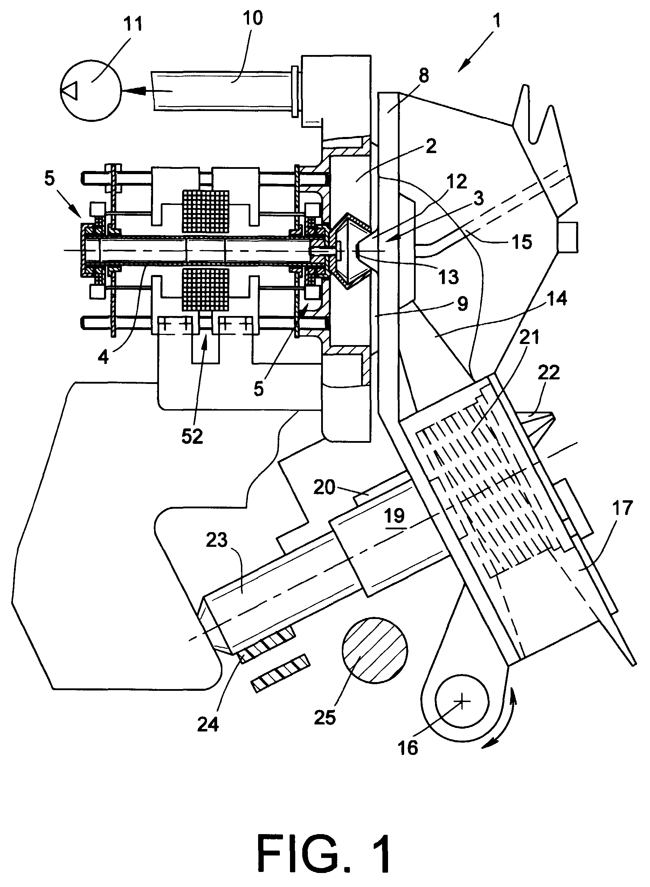

Die in Figur 1 dargestellte Offenend-Spinnvorrichtung trägt insgesamt die Bezugszahl 1.

Das bekannte Spinnaggregat verfügt dabei, wie üblich, über ein Rotorgehäuse 2, in dem die Spinntasse eines Spinnrotors 3 mit hoher Drehzahl umläuft. Der Spinnrotor 3 wird dabei durch einen elektrischen Einzelantrieb 52 angetrieben und ist mit seinem Rotorschaft 4 in den Lageranordnungen 49; 26, 44, 45, 46 einer magnetischen Lagerung 5 fixiert, die den Spinnrotor 3 sowohl radial als auch axial abstützt.

Wie üblich, ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen.
Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

Im Deckelelement 8 bzw. in der Kanalplatte ist ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an.
Außerdem ist am Deckelelement 8, das um eine Schwenkachse 16 begrenzt drehbar gelagert ist, ein Auflösewalzengehäuse 17 festgelegt. Das Deckelelement 8 weist des weiteren rückseitig Lagerkonsolen 19, 20 zur Lagerung einer Auflösewalze 21 beziehungsweise eines Faserbandeinzugszylinders 22 auf.
Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

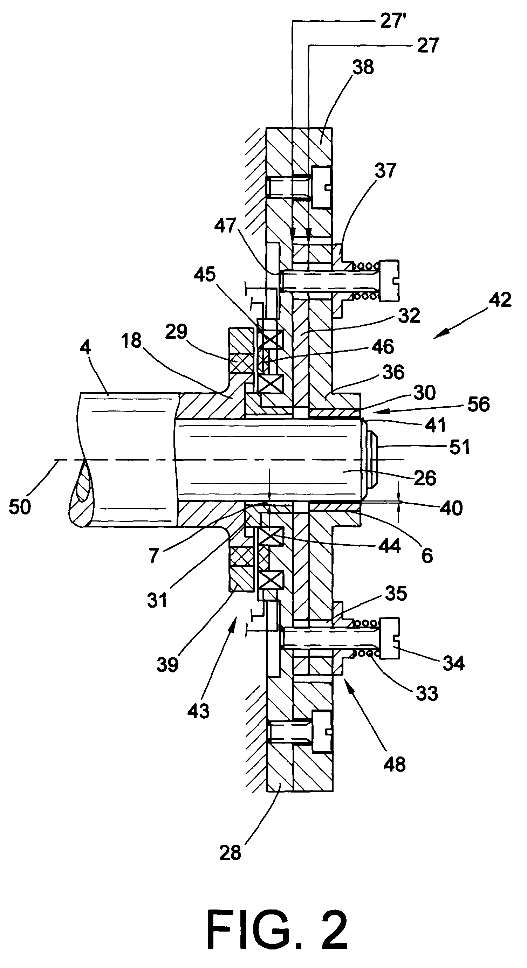

Figur 2 zeigt in einem vergräßernden Maßstab die erfindungsgemäße Dämpfungseinrichtung 42.

Die im Ausführungsbeispiel dargestellte Dämpfungseinrichtung 42 einer berührungslosen, passiven Spinnrotorlagerung 43 weist dabei eine mechanische Reibvorrichtung 48 auf, die im wesentlichen aus einem Lagerschild 28, einer Zwischenplatte 32 sowie einer bewegliche Reibplatte 36 besteht.
Die Reibplatte 36 ist über Schrauben 34, Federn 33 und Druckplättchen 37 reibschlüssig an das Lagerschild 28 angeschlossen. In einer Mittelbohrung 6 der beweglichen Reibplatte 36 ist außerdem eine Gleitlagerbuchse 30 festgelegt.

Des weiteren sind in entsprechenden Ausnehmungen des stationären Lagerschildes 28 ein Permanentmagnetring 46 sowie konzentrisch angeordnete, bestrombare Ringspulen 44, 45 positioniert. Diesen Magnetlagerkomponenten steht in geringem Abstand ein Permantmagnetlagerring 29 gegenüber, der in einen rotationssymmetrischen Bund 18 des Rotorschaftes 4 integriert ist. Der rotorseitige Lagermagnetring 29 ist dabei von einer Magnetbandage 39 umgeben.

In den stationären Lagerschild 28 ist außerdem ein mit 31 bezeichnetes Begrenzungslager eingelassen.

Wie aus Fig.2 ersichtlich, verfügt der Rotorschaft 4 endseitig über eine Anfasung 41, die das Einführen des rotationssymmetrischen Absatzes 26 in die vom Innendurchmesser her nur unwesentlich größere Gleitlagerbuchse 30 erleichtert.

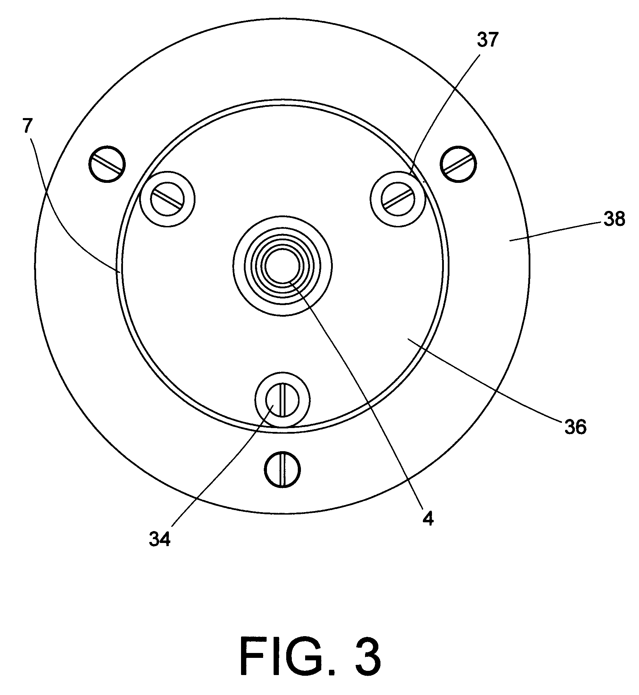

Die Figur 3 zeigt die Vorderansicht der vorstehend im Zusammenhang mit der Figur 2 beschriebenen Dämpfungseinrichtung 42. Figur 3 zeigt weiter den kreisrunden Spalt 7 zwischen der Reibplatte 36 und dem Anschlagring 38, der den radialen Reibweg der Dämpfungseinrichtung 42 begrenzt.

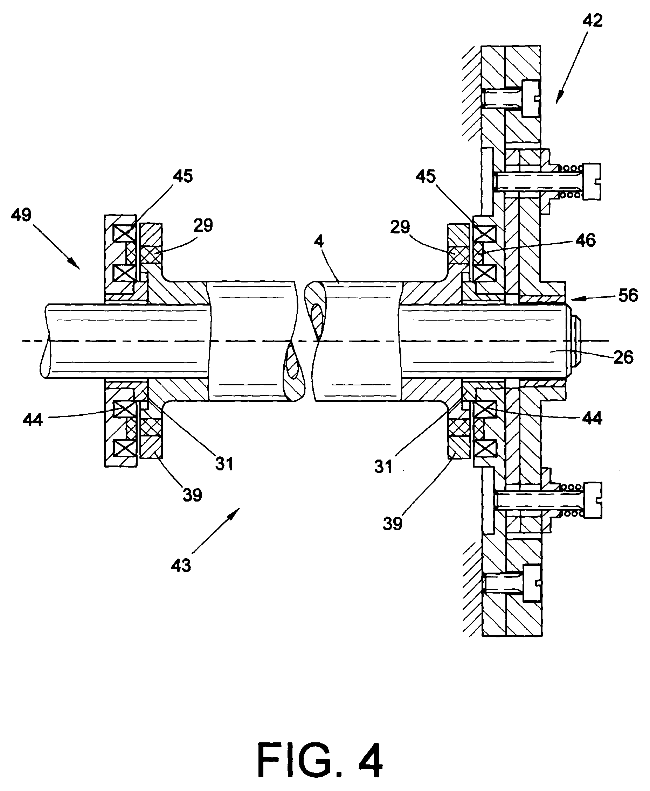

In Figur 4 sind, in Seitenansicht, sowohl die vordere, spinntassenseitige Lageranordnung 49 als auch die hinteren, dämpfungsseitigen Lagerkomponenten 26, 44, 45, 46 dargestellt.

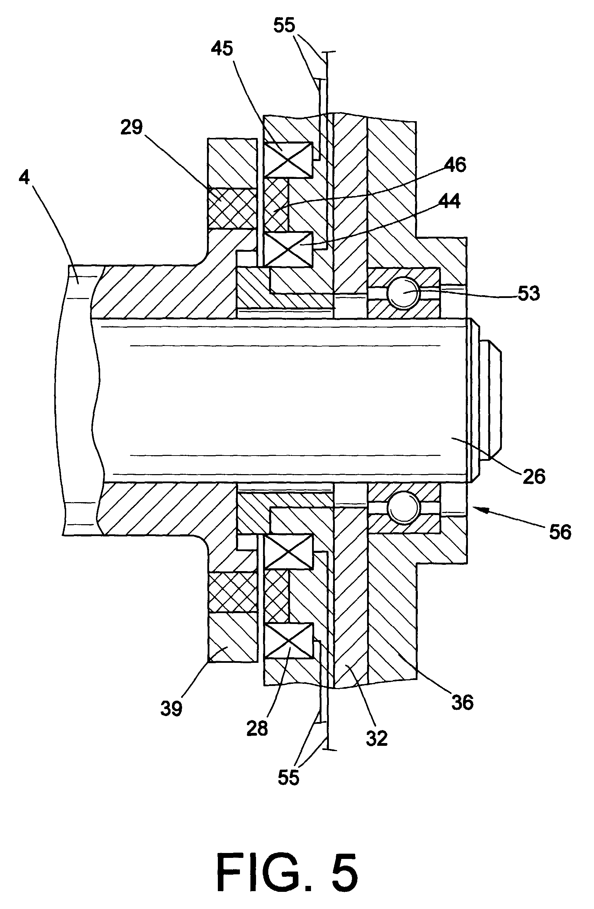

Die Figur 5 stellt eine Ausführungsform nach Anspruch 2 dar. Die Reibplatte 36 und das Wälzlager 53, welches mit geringem Lagerspiel von nur einigen um um den Rotorschaft 4 liegt, sind Gegenstand dieser Darstellung. Zusätzlich sind die elektrischen Spulenzuleitungen 55 eingezeichnet.

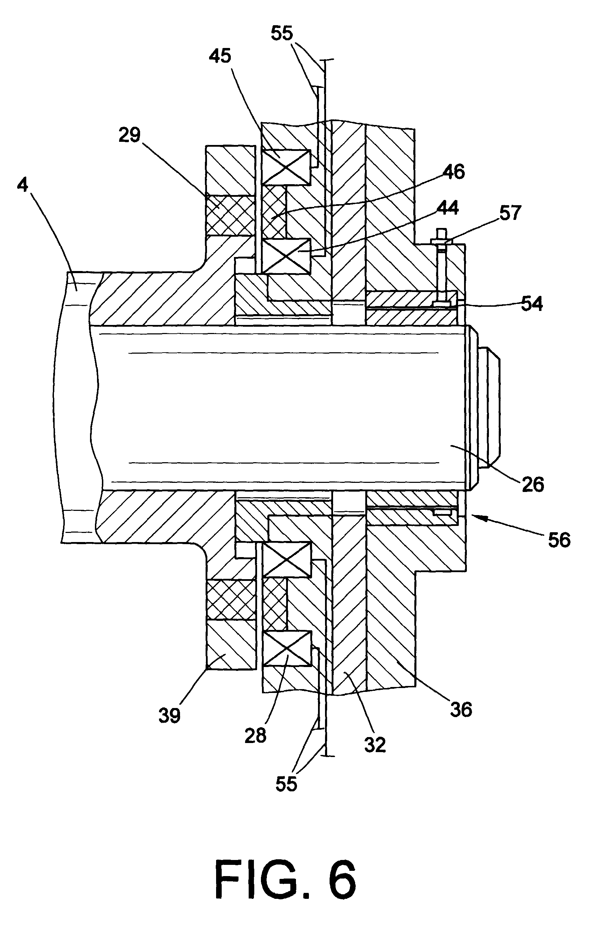

Die Figur 6 stellt eine Ausführungsform nach Anspruch 3 dar. Die Reibplatte 36 und ein aerostatisches Lager 54, sind Gegenstand dieser Darstellung. Des weiteren sind die Magnetlagerungskomponenten 28, 29, 39, 44, 45, und 46 dargestellt. Mit der Bezugszahl 55 sind die elektrischen Anschlüsse für die Spulen 44 und 45 dargestellt. Der mit 57 bezeichnete Druckluftanschluß dient zur Beaufschlagung des aerostetischen Lagers 54 mit Preßluft zum Aufbau des notwendigen Lagerdrucks.

### Funktionsbeschreibung:

Der insbesondere in den Figuren 2 und 4 dargestellte Absatz 26 des Rotorschaftes 4 ist in der Betriebsstellung des Spinnrotors 3, vorzugsweise mit etwas Lagerspiel 40, innerhalb der Lagerkomponente 56 der Dämpfungseinrichtung 42 positioniert. Das bedeutet, wenn der Spinnrotor 3 beim Hochlaufen auf seine Betriebsdrehzahl, insbesondere bei der Durchfahrung seiner kritischen Eigenfrequenzbereiche oder während des Spinnprozesses, infolge einer spinnmaterialbedingten, meist geringfügigen Unwucht radial verlagert wird, kommt es, sobald der Ansatz 26 am Rotorschaft 4 das Lagerspiel 40 im Bereich der Lagerkomponente 56 überwunden hat, auch zu einer seitlichen Verlagerung der Lagerkomponente 56.

Die radiale Verlagerung der Lagerkomponente 56 führt auch zu einer seitlichen Verlagerung der beweglich Reibplatte 36, in der die Lagerkomponente 56 festgelegt ist.

Bei der seitlichen Verlagerung der beweglichen Reibplatte 36, die ihrerseits über Schraubenbolzen 34, Federn 33 und Druckplättchen 37 sowie die Zwischenplatte 32 reibschlüssig an das stationäre Lagerschild 28 angeschlossen ist, treten Reibungsverluste auf, die zu einer Dämpfung der radialen Schwingungsamplituden des mit hoher Drehzahl umlaufenden Spinnrotors 3, insbesondere beim Durchfahren der Eigenfrequenzbereiche führen. Die bei der Verlagerung der Reibplatte 36 im Bereich der Zwischenplatte 32 an deren Reibflächen 27, 27' auftretenden Reibungsverluste sind dabei über eine Verstelleinrichtung 34, die beispielsweise wenigstens einen Schraubenbolzen aufweist, definiert einstellbar.

Durch das zusätzliche Begrenzungslager 31 wird außerdem sichergestellt, daß der Rotor des einzelmotorischen Antriebes 52 auch bei Betriebsbedingungen, die das Arbeitsvermögen der Dämpfungseinrichtung 42, zumindest kurzfristig, übersteigen, nicht an seinen Stator anlaufen kann.

Während des Spinnbetriebes ist der radial schwingende Spinnrotor 3, dessen Schwingungsfrequenzgang konvergierend verläuft, stets bestrebt, spiralförmig in die Mitte zu wandern und sich in der Rotationsachse 50 zu stabilisieren.
Das bedeutet, nach der Schwingungsberuhigung des Spinnrotors 3 durch die Dämpfungseinrichtung 42 steht z.B. auch die Gleitlagerbuchse 30 zentrisch zur Rotationsachse 50, so daß der rotationssymmetrischen Absatz 26 des Spinnrotorschaftes 4 wieder mit einem Lagerspiel 40 von beispielsweise ca. 0,2mm konzentrisch in der Gleitlagerbuchse 30 rotiert.

## Patentansprüche

1. Dämpfungseinrichtung einer berührungslosen, passiven radialen Lagerung eines mit hoher Drehfrequenz drehenden Rotors, insbesondere des Spinnrotors einer Offenend-Spinneinrichtung, mit einer Reibvorrichtung deren Reibpartner mechanisch beaufschlagbare Reibflächen aufweisen, wobei einer der Reibpartner zumindest radial lagefest an einem Lagerteil angeordnet und der andere Reibpartner radial lageveränderbar gehalten ist,
dadurch gekennzeichnet,
daß der radial lageveränderbare Reibpartner (36) eine Lagerkomponente (56) aufweist, die einen Rotorschaft (4) des Rotors (3) umschließt.

2. Dämpfungseinrichtung nach Anspruch 1, dadurch gekennzeichnet, daß die Lagerkomponente (56) als Teil eines Wälzlagers (53) ausgebildet ist.

3. Dämpfungseinrichtung nach Anspruch 1, dadurch gekennzeichnet, daß die Lagerkomponente (56) als Teil eines aerostatischen Lagers (54) ausgebildet ist.

4. Dämpfungseinrichtung nach Anspruch 1, dadurch gekennzeichnet, daß die Lagerkomponente (56) als Gleitlagerbuchse (30) ausgebildet ist.

5. Dämpfungseinrichtung nach einem der vorherigen Ansprüche, dadurch gekennzeichnet, daß die Lagerkomponente (56) den Rotorschaft (4) mit einem Lagerspiel (40) umschließt, das, insbesondere bei Verwendung eines Wälzlagers oder eines aerostatischen Lagers, nur wenige µm beträgt.

6. Dämpfungseinrichtung nach Anspruch 4, dadurch gekennzeichnet, daß der stationäre Reibpartner (28) ein Begrenzungslager (31) beinhaltet, und daß das Lagerspiel (40) im Bereich der Gleitlagerbuchse (56) kleiner ist als das Lagerspiel (7) des Begrenzungslagers.

7. Dämpfungseinrichtung nach einem der vorherigen Ansprüche, dadurch gekennzeichnet, daß der Anlagedruck der Reibflächen der Reibvorrichtung (48) durch eine Verstelleinrichtung (34) definiert einstellbar ist.

8. Dämpfungseinrichtung nach Anspruch 7, dadurch gekennzeichnet, daß die Verstelleinrichtung durch wenigstens einen Schraubenbolzen (34) gebildet wird.

9. Dämpfungseinrichtung nach einem der vorherigen Ansprüche, dadurch gekennzeichnet, daß die maximale radiale Auslenkung des lageveränderbar gelagerten Reibpartners (36) durch einen mechanischen Anschlag (35, 38) begrenzt wird.

10. Dämpfungseinrichtung nach Anspruch 9, dadurch gekennzeichnet, daß der mechanische Anschlag durch einen am stationären Reibpartner (28) angeordneten Ring (38) gebildet wird.

11. Dämpfungseinrichtung nach Anspruch 9, dadurch gekennzeichnet, daß der mechanische Anschlag zur Begrenzung der radialen Auslenkung des Rotors (3) durch Bohrungen (35) in der Reibplatte (36) gegenüber im stationären Reibpartner (28) festgelegte Schraubenbolzen (34) gebildet wird.

12. Dämpfungseinrichtung nach einem der vorherigen Ansprüche, dadurch gekennzeichnet, daß zwischen den Reibpartnern (28,36), eine Zwischenplatte (32) angeordnet ist.
